# EUROPÄISCHE PATENTANMELDUNG

(11) **EP 1 126 247 A2**
(43) Veröffentlichungstag der Anmeldung: **22.08.2001**
(21) Anmeldenummer: 01103147.3
(22) Anmeldetag: 10.02.2001
(51) Int. Cl.: G01D 3/08

(54) **Verfahren zur Fehlererkennung bei PWM-Signalen**

(30) Priorität: 19.02.2000 DE 10007644
(71) Anmelder: Hella KG Hueck & Co., 59552 Lippstadt (DE)
(72) Erfinder: Dustert, Jörg, 59494 Soest (DE); Lammers, Christian, 71706 Markgröningen (DE)

(57) **Zusammenfassung**

Verfahren zur Fehlererkennung bei PWM-Signalen, bei dem eine Anzahl von Periodendauern der PWM-Signale erfaßt werden, der Mittelwert dieser Periodendauern ermittelt wird, ein Toleranzbereich um diesen Mittelwert erzeugt wird, die nach der Erzeugung dieses Toleranzbereiches erfaßten Periodendauern von PWM-Signalen darauf überprüft werden, ob sie in diesem Toleranzbereich befindlich sind, und ein Fehler erkannt wird, wenn eine vorgegebene Zahl von Periodendauern als außerhalb des Toleranzbereichs befindlich ermittelt wird.

## Beschreibung

Die vorliegende Erfindung betrifft ein Verfahren zur Fehlererkennung bei PWM-Signalen.

Aus der deutschen Offenlegungsschrift DE 197 38 839 A1 ist ein induktiver Winkelsensor bekannt, der beispielsweise als induktiver Fahrzeugniveausensor eines Kraftfahrzeuges genutzt werden kann. Derartige Sensoren liefern als Ausgangssignal ein PWM-Signal, das heißt ein pulsbreitenmoduliertes Signal, bei dem der Ausgangswert als Tastverhältnis zwischen der Pulsbreite eines einzelnen Pulses und der Periodendauer der aufeinanderfolgenden Pulse gegeben ist. Die PWM-Signale eines derartigen induktiven Fahrzeugniveausensors werden beispielsweise von einem Steuergerät eingelesen und zur Regelung der Leuchtweite eines Kraftfahrzeuges über entsprechende Schrittmotoren oder ähnlich geeignete Stellmechanismen verwendet.

Um ein fehlerhaftes Regelverhalten eines derartigen Systems möglichst auszuschließen, müssen Störungen, die das aus dem Sensor ausgegebene PWM-Signal beeinflussen können, erkannt werden. Eine besonders häufig auftretende Störung ist ein durch Bauteiltoleranzen des Sensors auftretender relativ großer Toleranzbereich für die Grundfrequenz der Periode. Diese Grundfrequenz der Periode und damit die Periodendauer kann sich durch Temperatureinflüsse im Laufe der Regelung in den Grenzen dieses Toleranzbereiches entsprechend den Spezifikationen des Sensors verändern. Da das PWM-Signal von einem Steuergerät in der Regel über eine sogenannte Input-Capture-Funktion eingelesen wird, können weiterhin auch Störungen der Leitung zu einer Fehlmessung des PWM-Signals durch das Steuergerät führen.

Das der vorliegenden Erfindung zugrundeliegende Problem ist die Schaffung eines Verfahrens der eingangs genannten Art, das fehlerhafte PWM-Signale, die zu Fehlfunktionen beispielsweise eines Regelsystems führen könnten, erkennen kann.

Dies wird erfindungsgemäß durch die kennzeichnenden Merkmale der Ansprüche 1 und 4 erzielt. Bei dem Verfahren gemäß Anspruch 1 geschieht dies dadurch, daß eine Anzahl von Periodendauern der PWM-Signale erfaßt werden, daß daran anschließend der Mittelwert dieser Periodendauern ermittelt wird, daß daran anschließend ein Toleranzbereich um diesen Mittelwert erzeugt wird, daß die nach der Erzeugung dieses Toleranzbereiches erfaßten Periodendauern von PWM-Signalen darauf überprüft werden, ob sie in diesem Toleranzbereich befindlich sind, und daß ein Fehler erkannt wird, wenn eine vorgegebene Zahl von Periodendauern als außerhalb des Toleranzbereichs befindlich ermittelt wird. Durch dieses erfindungsgemäße Verfahren wird somit die Frequenz der Periode des PWM-Signals in vorgebbar engen Grenzen überwacht, so daß ein PWM-Signal, das bei einem Regelsystem zu einem fehlerhaften Regelverhalten führen könnte, als ungeeignet bzw. fehlerhaft ausgeschlossen werden kann.

Die vorgegebene Zahl von Periodendauern kann vorzugsweise größer als 1 sein, so daß insbesondere bei jeder außerhalb des Toleranzbereichs befindlichen Periodendauer ein Fehlerzähler hochgezählt wird und bei Erreichen der vorgegebenen Zahl ein Fehler erkannt wird. Hierdurch wird vermieden, daß bereits ein einzelner außerhalb des Toleranzbereichs befindlicher Wert der Periodendauer zu einer Fehlererkennung mit entsprechenden Konsequenzen führt.

Gemäß einer bevorzugten Ausführungsform der vorliegenden Erfindung werden auch nach der ersten Ermittlung des Mittelwerts und des um diesen erzeugten Toleranzbereichs zumindestens einige, insbesondere sämtliche, der erfaßten Periodendauern dazu verwendet, den Mittelwert und damit den Toleranzbereich zu aktualisieren. Dadurch wird eine dynamische Anpassung des Toleranzbereiches während des Betriebes beispielsweise der Regelung fortgeführt. Auf diese Weise wird vermieden, daß eine langsame Änderung der Grundfrequenz der Periode des PWM-Signals beispielsweise durch Temperatureinflüsse dazu führt, daß ein Fehler erkannt wird. Dies ist insbesondere dann sinnvoll, wenn dieser dynamische Toleranzbereich relativ eng begrenzt ist, so daß er innerhalb der Grenzen des Toleranzbereiches liegt, der gemäß Spezifikation des beispielsweise Sensors vorgegeben ist.

Gemäß Anspruch 4 werden die erfaßten PWM-Signale einer Plausibilitätsüberprüfung derart unterzogen, daß aus der Pulsbreite und der Periodendauer des aktuell erfaßten PWM-Signals ein Tastverhältnis ermittelt wird, das mit dem zuvor ermittelten Tastverhältnis des unmittelbar zuvor erfaßten PWM-Signals verglichen wird, wobei dann ein Tastverhältnis als unplausibel eingestuft wird, wenn die absolute Differenz der Tastverhältnisse der beiden unmittelbar nacheinander erfaßten PWM-Signale einen vorgegebenen Wert übersteigt. Der vorgegebene Wert für die absolute Differenz zweier Tastverhältnisse kann beispielsweise sensorspezifisch gewählt werden. Falls dieser Wert überschritten wird, wird daß zuletzt gemessene PWM-Signal als unplausibel erkannt.

Es besteht die Möglichkeit, bereits bei Feststellung eines einzelnen unplausiblen Tastverhältnisses einen Fehler zu erkennen. Alternativ dazu kann bei jedem als unplausibel erkannten Wert ein entsprechender Zähler hochgezählt werden, wobei genau dann ein Fehler erkannt wird, wenn die Anzahl der als unplausibel erkannten Werte einer vorgegebenen Zahl entspricht.

Gemäß einer bevorzugten Ausführungsform der vorliegenden Erfindung wird das PWM-Signal aus einem Sensor ausgelesen. Hierbei kann es sich um einen Fahrzeugniveausensor, insbesondere um einen induktiven Fahrzeugniveausensor handeln.

Vorzugsweise werden bei der Mittelwertbildung nur Periodendauern genutzt, die innerhalb eines von den Sensorspezifikationen vorgegebenen Toleranzbereichs befindlich sind. Auf diese Weise wird vermieden, daß in die für die weitere Fehlererkennung bedeutsame Ermittlung des Mittelwertes fehlerhafte PWM-Signale eingehen.

Es kann sich weiterhin als vorteilhaft erweisen, wenn das erfindungsgemäße Verfahren einen Fehler erkennt, wenn die Periodendauer eines erfaßten PWM-Signals außerhalb des durch die Sensorspezifikation vorgegebenen Toleranzbereichs befindlich ist.

Gemäß einer bevorzugten Ausführungsform der vorliegenden Erfindung werden die PWM-Signale von einem Steuergerät einer Regelung, insbesondere einer Leuchtweitenregelung eines Kraftfahrzeuges eingelesen. Für diese Regelung können insbesondere die Sensorsignale eines induktiven Fahrzeugniveausensors verwandt werden.

Vorteilhafterweise kann bei Erkennung eines Fehlers die Regelung gestoppt werden, wobei nach einer vorgegebenen Pause die Regelung wieder neu starten kann.

Hierzu kann vor Beginn der Regelung der Mittelwert der Periodendauern der PWM-Signale und der um diesen Mittelwert erzeugte Toleranzbereich neu ermittelt werden. Auf diese Weise wird berücksichtigt, daß insbesondere nach Abstoppung einer Regelung und entsprechender darauffolgender Pause die Periodendauer bzw. die Grundfrequenz der Periode des PWM-Signals beispielsweise durch Temperatureinflüsse verändert worden sein kann.

Es erweist sich als vorteilhaft, wenn nur plausible Werte und/oder nur innerhalb des dynamischen Toleranzbereichs befindliche und/oder innerhalb des durch die Sensorspezifikationen vorgegebenen Toleranzbereichs befindliche Werte für die Regelung verwendet werden.

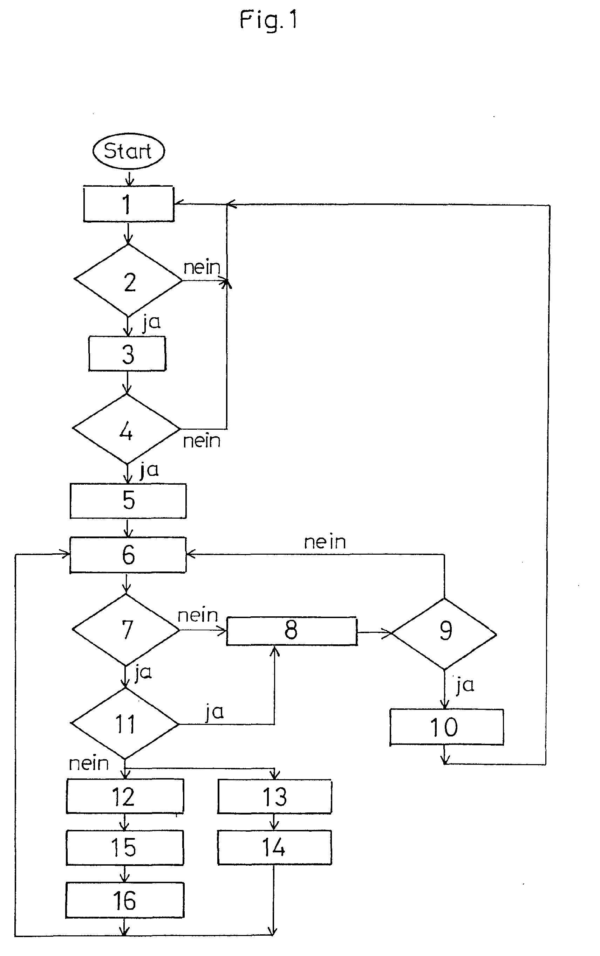

Weitere Merkmale und Vorteile der vorliegenden Erfindung werden deutlich anhand der nachfolgenden Beschreibung eines bevorzugten Ausführungsbeispiels unter Bezugnahme auf die beiliegende Abbildung. Darin zeigt
- Fig. 1: ein Flußdiagramm eines erfindungsgemäßen Verfahrens zur Fehlererkennung.

Bei einer beispielhaften Ausführungsform des erfindungsgemäßen Verfahrens wird das PWM-Signal eines Sensors, beispielsweise eines induktiven Fahrzeugniveausensors, von einem Steuergerät eingelesen. Gemäß dem in Fig. 1 abgebildeten Flußdiagramm liest das Steuergerät nach dem Start des Programms in dem Schritt 1 die Periodendauer des PWM-Signals ein. In dem Schritt 2 wird entsprechend dem erfindungsgemäßen Verfahren ermittelt, ob diese Periodendauer innerhalb sensorspezifischer vorgegebener Spezifikationen liegt. Falls dies nicht der Fall ist, wird dieses Meßergebnis der in Schritt 1 eingelesenen PWM-Periodendauer nicht verwertet. Daran anschließend verzweigt das Programm zurück zu Schritt 1 und liest die Periodendauer noch einmal ein. Falls in Schritt 2 festgestellt wird, daß die eingelesene Periodendauer innerhalb der vorgegebenen Spezifikationen des Sensors liegt, wird in dem Schritt 3 der Mittelwert der bisher eingelesenen Periodendauer gebildet. Daran anschließend wird in Schritt 4 festgestellt, ob eine einer vorgegebenen Zahl entsprechende Zahl von PWM-Periodendauern eingelesen wurde. Dazu wird bei jedem Einlesen einer PWM-Periodendauer ein Zähler hochgezählt, dessen Zählerstand in Schritt 4 mit einer vorgegebenen Zahl verglichen wird. Falls die vorgegebene Zahl noch nicht erreicht ist, wird vom Schritt 4 zu Schritt 1 zurückverzweigt und es wird eine weitere PWM-Periodendauer eingelesen.

Falls eine der vorgegebenen Zahl entsprechende Zahl von Periodendauern eingelesen wurde, wird der in Schritt 3 gebildete Mittelwert in Schritt 5 dazu verwendet, einen Toleranzbereich um diesen Mittelwert herum zu schaffen.

Dieser Toleranzbereich liegt erfindungsgemäß innerhalb der Grenzen des Toleranzbereichs der PWM-Periodendauer gemäß Spezifikation des Sensors. Der in Schritt 5 geschaffene Toleranzbereich ist somit enger als der sich aus den Spezifikationen des Sensors ergebene Toleranzbereich.

Im Schritt 6 wird aus dem Sensor die PWM-Periodendauer und die Pulsbreite des aktuellen Pulses eingelesen. In dem darauf folgenden Schritt 7 wird überprüft, ob die in Schritt 6 eingelesene Periodendauer innerhalb des Toleranzbereiches gemäß Spezifikation des Sensors liegt. Falls dies nicht der Fall ist, wird in einem Schritt 8 in einem Fehlerzähler zu einem bestehenden Wert beispielsweise eine 1 addiert. Daran anschließend wird in einem Schritt 9 überprüft, ob dieser Fehlerzähler einen vorgegebenen Wert überschreitet. Falls dies nicht der Fall ist, wird von dem Schritt 9 zu dem Schritt 6 zurückverzweigt, so daß von neuem die Periodendauer und die Pulsbreite aus dem Sensor in das Steuergerät eingelesen werden. Falls in Schritt 9 das Überschreiten des vorgegebenen Grenzwertes des Fehlerzählers festgestellt wird, wird in einem Schritt 10 die Messung gestoppt und für einen vorgebbaren Zeitwert pausiert. Daran anschließend wird das Programm zu dem Programmschnitt 1 zurückverzweigt, so daß der Mittelwert der PWM-Periodendauer neu bestimmt werden kann.

Falls in Schritt 7 festgestellt wird, daß die eingelesene Periodendauer innerhalb des Toleranzbereiches gemäß Spezifikation des Sensors liegt, wird in einem weiteren Schritt 11 ermittelt, ob der vorher in Schritt 5 gebildete Toleranzbereich überschritten ist. Falls dies der Fall ist, verzweigt das Programm zu dem Schritt 8, so daß der Zahlenwert des Fehlerzählers erhöht wird und die entsprechende Abfrage in Schritt 9 hinsichtlich des Überlaufs des Fehlerzählers durchgeführt wird. Falls in Schritt 11 festgestellt wird, daß der in Schritt 5 gebildete Toleranzbereich nicht überschritten ist, wird zum einen das Ausgangssignal des Sensors aus dem Tastverhältnis, das heißt aus dem Verhältnis von Pulsbreite zu Periodendauer, ermittelt. Dies geschieht in Schritt 12. Parallel zu dem Schritt 12 wird in dem Schritt 13 die innerhalb des in Schritt 5 ermittelten Toleranzbereichs liegende Periodendauer dazu verwendet, den in Schritt 3 gebildeten Mittelwert anzupassen. Das heißt, wenn sich beispielsweise aufgrund von Temperatureinflüssen im Laufe der Meß- bzw. Regelzeit die PWM-Periodendauer des Sensors ändert, ändert sich auch aufgrund der in Schritt 13 ständig mitlaufenden Mittelwertbildung der Mittelwert der Periodendauer, der dann wiederum in Schritt 14 dazu benutzt wird, die sogenannten inneren Toleranzgrenzen an den in Schritt 13 neu ermittelten Mittelwert anzupassen. Diese in Schritt 14 neu ermittelten Toleranzgrenzen werden bei gemäß Schritt 6 neu eingelesenen Periodendauern und Pulsbreiten berücksichtigt hinsichtlich der wiederum in Schritt 11 erfolgenden Abfrage der Einhaltung bzw. Überschreitung dieses Toleranzbereichs.

Anschließend an den Schritt 12 erfolgt in Schritt 15 eine Plausibilitätsüberprüfung des in Schritt 12 ermittelten Ausgangswert des Sensors. Die in Schritt 15 durchgeführte Plausibilitätsüberprüfung geschieht dadurch, daß der aktuelle Wert mit dem zuletzt eingelesene Wert verglichen wird. Die Differenz zweier aufeinanderfolgender Werte darf erfindungsgemäß einen vorgegebenen beispielsweise sensorspezifischen Betrag nicht überschreiten. Ansonsten liegt eine Fehlmessung vor, so daß der in Schritt 12 berechnete Wert nicht zur Regelung genutzt wird. Falls der in Schritt 15 überprüfte Sensorwert als plausibel eingestuft wird, wird er in Schritt 16 an eine Regelung, beispielsweise an Schrittmotoren einer dynamischen Leuchtweitenregelung eines Kraftfahrzeuges weitergegeben. Daran anschließend wird zu dem Schritt 6 zurückverzweigt und erneut die Periodendauer bzw. Pulsbreite aus dem Sensor in das Steuergerät eingelesen.

Es besteht auch die Möglichkeit, bei einem in Schritt 15 festgestellten nicht plausiblen Wert zu Schritt 8 zu verzweigen und den Fehlerzähler zu erhöhen, so daß bei einigen festgestellten nicht plausiblen Werten die Messung gemäß Schritt 10 gestoppt und erst nach einer Pause wieder mit Schritt 1 neu begonnen wird.

## Patentansprüche

1. Verfahren zur Fehlererkennung bei PWM-Signalen, gekennzeichnet durch folgende Verfahrensschritte:
- eine Anzahl von Periodendauern der PWM-Signale werden erfaßt;
- der Mittelwert dieser Periodendauern wird ermittelt;
- ein Toleranzbereich um diesen Mittelwert wird erzeugt;
- die nach der Erzeugung dieses Toleranzbereiches erfaßten Periodendauern von PWM-Signalen werden darauf überprüft, ob sie in diesem Toleranzbereich befindlich sind;
- ein Fehler wird erkannt, wenn eine vorgegebene Zahl von Periodendauern als außerhalb des Toleranzbereichs befindlich ermittelt wird.

2. Verfahren nach Anspruch 1, dadurch gekennzeichnet, daß die vorgegebene Zahl von Periodendauern, bei deren Erreichen ein Fehler erkannt wird, größer als 1 ist, wobei vorzugsweise bei jeder außerhalb des Toleranzbereichs befindlichen Periodendauer ein Zähler hochgezählt wird und der Inhalt dieses Zählers mit der vorgegebenen Zahl verglichen wird.

3. Verfahren nach einem der Ansprüche 1 oder 2, dadurch gekennzeichnet, daß auch nach der ersten Ermittlung des Mittelwertes und des um diesen erzeugten Toleranzbereiches zumindest einige, insbesondere sämtliche, der erfaßten Periodendauern dazu verwendet werden, den Mittelwert und damit den Toleranzbereich zu aktualisieren.

4. Verfahren nach einem der Ansprüche 1 bis 3, oder nach dem Oberbegriff des Anspruchs 1, dadurch gekennzeichnet, daß die erfaßten PWM-Signale einer Plausisibilitätsüberprüfung derart unterzogen werden, daß aus der Pulsbreite und der Periodendauer des aktuell erfaßten PWM-Signals ein Tastverhältnis ermittelt wird, das mit dem zuvor ermittelten Tastverhältnis des unmittelbar zuvor erfaßten PWM-Signals verglichen wird, wobei dann ein Tastverhältnis als unplausibel eingestuft wird, wenn die absolute Differenz der Tastverhältnisse der beiden unmittelbar nacheinander erfaßten PWM-Signale einen vorgegebenen Wert übersteigt.

5. Verfahren nach Anspruch 4, dadurch gekennzeichnet, daß bei Feststellung eines einzelnen unplausiblen Tastverhältnisses ein Fehler erkannt wird.

6. Verfahren nach Anspruch 4, dadurch gekennzeichnet, daß bei jedem als unplausibel erkannten Tastverhältnis ein entsprechender Zähler hochgezählt wird und daß dann ein Fehler erkannt wird, wenn die Zahl der als unplausibel einstuften Tastverhältnisse einer vorgegebenen Zahl entspricht.

7. Verfahren nach einem der Ansprüche 1 bis 6, dadurch gekennzeichnet, daß das PWM-Signal aus einem Sensor ausgelesen wird.

8. Verfahren nach Anspruch 7, dadurch gekennzeichnet, daß das PWM-Signal aus einem vorzugsweise induktiven Fahrzeugniveausensor eines Kraftfahrzeuges ausgelesen wird.

9. Verfahren nach einem der Ansprüche 7 oder 8, dadurch gekennzeichnet, daß bei der Mittelwertbildung nur die Periodendauern berücksichtigt werden, die innerhalb vorgegebener Spezifikationen des verwendeten Sensors befindlich sind.

10. Verfahren nach einem der Ansprüche 7 bis 9, dadurch gekennzeichnet, daß dann ein Fehler erkannt wird, wenn die Anzahl der außerhalb der Spezifikationen des Sensors befindlichen Periodendauern einer vorgegebenen Zahl entspricht.

11. Verfahren nach einem der Ansprüche 1 bis 10, dadurch gekennzeichnet, daß die PWM-Signale von einem Steuergerät einer Regelung, insbesondere einer Leuchtweiteregelung eines Kraftfahrzeuges, eingelesen werden.

12. Verfahren nach Anspruch 11, dadurch gekennzeichnet, daß die aus dem Sensor ausgelesenen PWM-Signale von dem Steuergerät zur Regelung, insbesondere zur Regelung der Leuchtweite eines Kraftfahrzeuges, genutzt werden.

13. Verfahren nach einem der Ansprüche 11 oder 12, dadurch gekennzeichnet, daß bei Erkennung eines Fehlers die Regelung gestoppt wird, wobei nach einer vorgegebenen Pause die Regelung wieder neu gestartet wird.

14. Verfahren nach einem der Ansprüche 11 bis 13, dadurch gekennzeichnet, daß vor Beginn der Regelung der Mittelwert der Periodendauer des PWM-Signals und der um diesen Mittelwert erzeugte Toleranzbereich ermittelt beziehungsweise neu ermittelt wird.

15. Verfahren nach einem der Ansprüche 11 bis 14, dadurch gekennzeichnet, daß nur plausible Werte, bei denen das Tastverhältnis zweier unmittelbar nacheinander erfaßten PWM-Signale einen vorgegebenen Wert nicht übersteigt, an die Regelung übergeben werden.

16. Verfahren nach einem der Ansprüche 7 bis 15, dadurch gekennzeichnet, daß der um den Mittelwert der Periodendauern der PWM-Signale erzeugte Toleranzbereich innerhalb des durch die Spezifikation des Sensors gegebenen Toleranzbereichs befindlich ist.
